# EUROPEAN PATENT SPECIFICATION

(11) **EP 2 974 857 B1**
(45) Date of publication and mention of the grant of the patent: **13.09.2017**
(21) Application number: 15176359.6
(22) Date of filing: 10.07.2015
(51) Int. Cl.: B31F 1/07, F16C 13/02

(54) **EMBOSSING/LAMINATING ROLLER**
PRÄGE-/LAMINIERWALZE
ROULEAU DE STRATIFICATION/GAUFRAGE

(30) Priority: 15.07.2014 IT MI20141286
(43) Date of publication of application: 20.01.2016
(73) Proprietor: Paper Converting Machine Company Italia S.p.A., 55051 Fornaci di Barga (LU) (IT)
(72) Inventor: SPINELLI, Stefano, 55023 Borgo a Mozzano (Lucca) (IT); STEFANI, Nicola, 55023 Borgo a Mozzano (Lucca) (IT); SCIPIONI, Alessandro, 55023 Borgo a Mozzano (Lucca) (IT); MORICONI, Emanuele, 55023 Borgo a Mozzano (Lucca) (IT)
(74) Representative: Petruzziello, Aldo

(56) References cited:
- EP-A1- 2 497 633
- US-A- 242 058
- US-A- 3 678 846
- US-A- 6 143 112
- US-A1- 2008 251 956
- US-A1- 2010 181 040

## Description

The present invention relates to an improved embossing/laminating roller.

More particularly the present invention relates to an embossing/laminating roller which can also be used for operations of calendering and is especially suitable for use in embossing/laminating apparatuses for the production of tissue paper products such as toilet paper, all-purpose absorbent paper or products in nonwoven fabric or similarly suitable for a hygiene or sanitary use.

As is known, the cycle of production of tissue paper comprises different working phases performed on different machines or apparatuses such as, for example, the forming of the sheet of paper, drying, puckering, winding of the sheets, rewinding of layers coming from several sheets, printing, embossing of one or more sheets of the reels and further processes such as cutting of the rolls into the sizes required and packaging of the same,

With special reference to the phase or process of embossing, it has the function of imprinting on one or more layers of a roll or film of paper a particular engraving apt to confer to the finished product both aesthetic and functional features (for example these engravings can produce an effect of optimised absorption and/or channelling of liquids by the sheet of paper or an improved capacity to retain dust or, again, an improved cleaning action and the like).

The process or phase of embossing is performed using one or more pairs of embossing rollers defining an embossing unit, optionally coupled with a glue distribution unit (having the function of making adhere one to the other two or more layers constituting the roll of paper) and with a lamination unit so as to define an embossing machine or station.

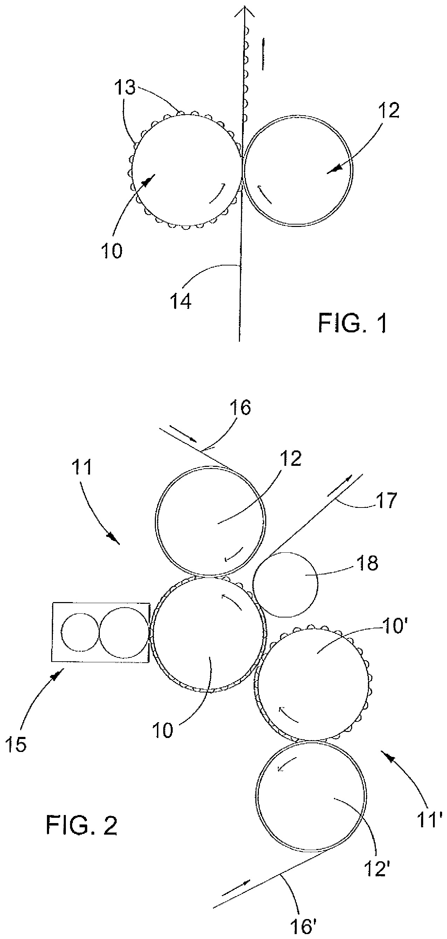

The embossing units, as described above and as schematised in Figure 1, comprise a pair of rollers, denoted by 10 and 12, whose contact surfaces can both be in steel or one in steel (roller 10 or roller A) and the other in plastic or elastomeric material (roller 12 or roller B). Moreover one of the aforesaid rollers (typically that in steel or roller 10) has on the external side surface engravings 13 for the performance of the processes on the surface of a film of paper 14 interposed between said two rollers rotating in opposite directions.

Moreover, as schematised in Figure 2, the embossing units (denoted by 11 and 11') can be combined with a glue distribution unit 15 and with a lamination unit (in Figure 2 defined by a laminating roller 18), so as to define an embossing/laminating machine or apparatus in which the layers (for example the two layers 16 and 16') are fed separately to the two embossing units 11 and 11' which work in an opposed manner (according to the traditional techniques of the tip-to-tip or nested type) to obtain, co-operating with the glue distribution unit 15 and with the laminating roller 18, a sheet or film of multi-layer paper 17. The glue for the adhesion between the layers 16 and 16' is applied on one of said layers which transits through one of the embossing units and the pressure of gluing between the layers is exerted by means of the laminating roller 18 typically made in very hard rubber.

However the embossing units described above have, in the working phase, some major disadvantages which jeopardise the good quality of the finished product.

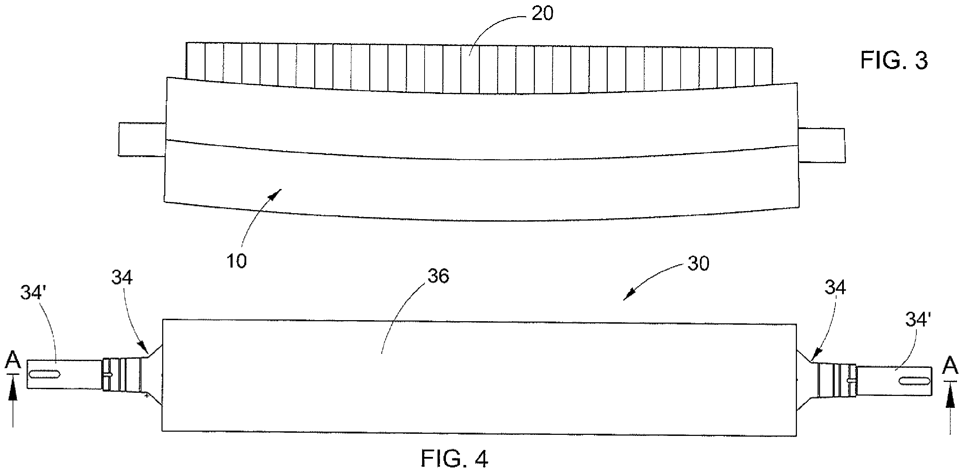

In fact the rollers constituting the single embossing unit are coupled with a certain pressure and, during the embossing process, are subject to flexural deformation with a load, denoted by 20 in Figure 3, not evenly distributed and such as to determine an uneven distribution of the engraving on the paper film placed between the two opposite rollers.

In order to avoid this problematical disadvantage some technical solutions provide for a profiling of the coating of the roller in rubber, so as to compensate the flexure caused by the contact pressure.

According to other constructional and process solutions the problem highlighted above is tackled by reducing the embossing load so as to reduce the flexure of the embossing rollers, or so-called skewing of the embossing rollers is performed consisting in varying the surface of contact and the pressure of the rollers, modifying the slant of the rubber rollers so as to make the engraved imprint even.

However these solutions do not solve in an optimal manner the problem presented above and, moreover, tend to restrict the working and process window of the embossing/laminating machinery with consequent increases in production costs.

Another solution aimed at reducing the disadvantages caused by the deformation of the rollers through the effect of the contact pressure foresees, for example, the use of rollers comprising a non-rotating central axis, support bearings and an external jacket freely rotating with respect to said central shaft. In this way the central axis tends to bend under the action of the embossing load, while the external tubular jacket, mounted on the support bearings, is subject to a simple displacement and not to a flexure.

However this solution, as well as being very complex in constructional terms, entails considerable production and maintenance costs and, moreover, taking account of the fact that the axis of the roller is non-rotating, requires a study of the system of transmission of motion which is very complex and such as to make this solution unusable on traditional embossers, but only on dedicated machines.

A further solution for realisation provides for the use of a roller with rotating central axis, an external jacket similar to that described above and elements of connection between said jacket and said central roller oscillating and not rotating.

However this solution too entails considerable disadvantages of a constructional nature and correlated high costs of production and maintenance of the device.

Document US242058A discloses a roller according to the preamble of claim 1. The object of the present invention is that of obviating the disadvantages stated above.

More particularly, the object of the present invention is that of providing an embossing/laminating roller such as to be subject, under load, to an even deformation in the direction of the load applied so as to guarantee an even and optimal distribution of the engraving on the sheet or film of paper being processed.

A further object of the present invention is that of providing an embossing/laminating roller such as to be able to be interchangeable with traditional devices without the need for dedicated devices.

A further object of the present invention is that of making available to users an improved embossing/laminating roller suitable for guaranteeing a high value of resistance and reliability in time and such, moreover, as to be able to be easily and economically manufactured.

These and other objects are achieved by the apparatus of the invention which has the features as claimed in claim 1.

Advantageous embodiments of the invention are disclosed by the dependent claims.

The constructional and functional features of the improved embossing/laminating roller of the present invention will be made clearer by the following detailed description, in which reference is made to the accompanying drawings which represent a preferred and non-limiting embodiment thereof and in which:
Figure 1 shows a schematic view of an embossing unit as described above in accordance with the prior art;
Figure 2 shows a schematic view of an embossing/laminating apparatus as described previously;
Figure 3 shows schematically the deformation of a traditional embossing roller with indication of the distribution of the pressure load;
Figure 4 shows schematically a front view of the improved embossing/laminating roller of the present invention;
Figure 5 shows a schematic side view of the roller of the invention;
Figure 6 shows schematically a section view (along an axial plane A-A of Figure 4) of the roller of the invention;
Figure 7 shows schematically the roller of the invention in the section view as per the previous drawing and deformed through the effect of an applied load.

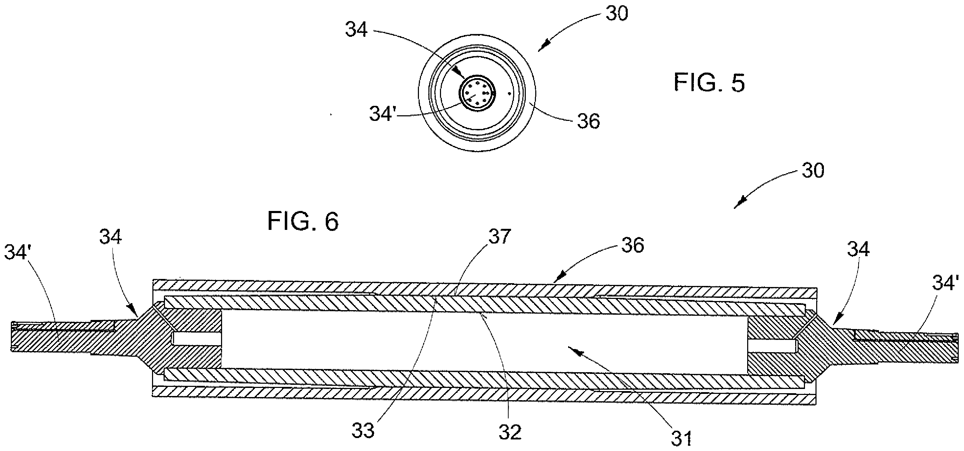

Referring to the aforementioned drawings, the improved roller for embossing/laminating of the present invention, denoted by 30 in Figures 4 to 7, is defined by an assembly comprising a central axis 31 defined by a centrally hollow tubular element 32 and by a pair of inserts or pads 34 coupled axially to the tubular element 32 at its opposite ends and a tubular jacket 36 fitted externally and coaxially to the tubular element 32 of the central axis 31.

The tubular element 32 is made typically in metal material, longitudinally developed with an outer diameter which, starting from the end portions, gradually grows in the direction of a central band or portion 33 to define an external surface shape, slightly barrelled.

The inserts or pads 34, likewise made in metal material, are rigidly restrained to the opposite ends of the tubular element 32 by means, for example, of a process of plugging with heat or by means of the use of retaining means of the screws, keys, grooved profiles type or the like,

The inserts or plugs 34 have projecting ends 34' with respect to the ends of the tubular element 32 and are suitable for a coupling with respect to the support elements for the function detailed here below.

The tubular jacket 36 is fitted externally and coaxially to the tubular element 32 and has a longitudinal development substantially corresponding to that of said tubular element 32.

The outer surface of the tubular jacket 36 can be engraved with geometric, patterned or other type of decorative motifs or elements to form the imprinting of the paper or of other material subjected to the process of embossing.

The inner surface of the tubular jacket 36, at a central zone, has a central annular band or portion 37, projecting internally and whose diameter is smaller than the inner diameter of the tubular jacket 36 and substantially corresponding to the outer diameter of the tubular element 32 at the central band 33.

The condition described above configures a connection preferably by interference between the tubular element 32 and the tubular jacket 36.

The roller assembly constituted in this way is mounted on positionable bearings at the projecting ends 34' of the inserts or plugs 34 and connected to a device of transmission of motion (not shown in the drawings) of an embossing unit. The connection described above between the external tubular jacket 36 and the internal tubular element 32 allows the transmission of the rotational torque from said tubular element (via the transmission device) to the external jacket.

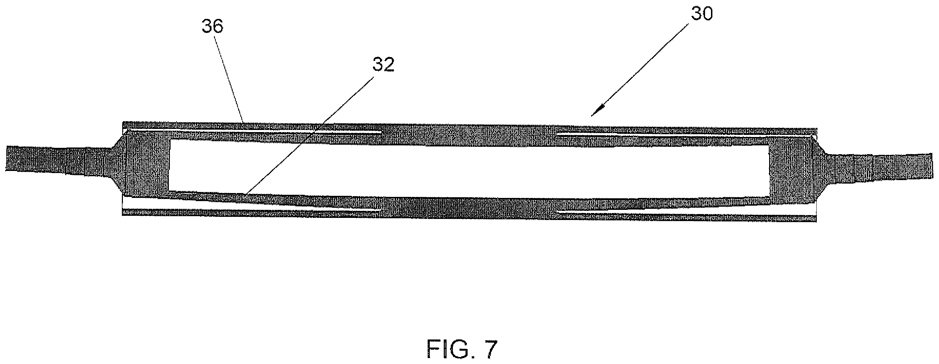

Figure 7 illustrates the condition of deformation of the embossing roller 30 when, during functioning, the embossing pressure is applied, apt to allow the creation of deformations (for example of the "engravings" or embossing/debossing processes) on the layers of the film of paper.

Through the effect of the pressure stresses the tubular element 32, rotatably restrained at the projecting ends 34' of the inserts or pads 34, bends along a camber substantially corresponding to that which characterises traditional rollers, while the tubular jacket 36 is subject only to a simple displacement without flexural deformation. This is linked to the presence of the central band 37 of the tubular jacket whose diameter corresponds to that of the central band 33 of the annular element 32 and which allows a stiffening of the structure suitable for avoiding or substantially lowering the deformation of the external tubular jacket.

In fact structural calculi performed using the method of finite element analysis (FEA) have allowed ascertaining of a displacement under load of said tubular jacket 36 no greater than 0.3 mm with a displacement along the table of the roller no greater than 0.03 mm.

Considering, for example, a geometry of roller with outer diameter equal to 500 mm, with a tubular jacket of length equal to 2900 mm and subject to a working pressure of 40 kg/cm, the camber at the centre takes on a value of approximately 0.336 mm while the differential camber between the centre and the end takes on a value equal to approximately 0.009 mm, Contrarily, considering a similar roller with standard geometry, the camber at the centre has a value equal to about 0,170 mm and the differential camber a value equal to about 0,130 mm.

The central bands of the tubular element 32 and of the tubular jacket 36 define a central band (sum of the two central bands 33 and 37) with greater rigidity with respect to that of the single tubular element 32 and of the tubular jacket 36 and, therefore, not subject to flexural deformation under load.

The roller 30, made according to what is described in detail above and defining the roller A, is coupled with a roller B with conventional geometry or with a geometry corresponding to that described with reference to the roller A to define an embossing unit coupled to a glue distribution unit and to a laminating unit to form a paper laminating and embossing apparatus.

As can be seen from the above the advantages that the improved embossing/laminating roller achieves are clear.

The improved embossing/laminating roller of the present invention allows advantageously the obtaining, under load, of a substantially even deformation of the external tubular jacket so as to avoid an uneven distribution of the engravings on the layers of the sheet of paper along the generatrix of the same roller and to obtain, consequently, a machining of optimal quality.

A further advantage is represented by the fact that the improved embossing roller of the invention is simple and economical to make, with lower, if not zero, maintenance costs.

A further advantage is represented by the fact that the embossing/laminating roller designed in this way is easily interchangeable with already existing rollers mounted on traditional embossing units.

More particularly, thanks to the detachable side pads 34, it is possible to use the present improved roller 30 on any type of existing embossing/laminating machine, facilitating the manipulation and the change of rollers: in fact it is sufficient to choose the type of pad according to the machine using however the same hollow tubular element 32 and the same jacket, an operation not possible in the case of known rollers having solid (full) rotating axis whose ends are integral therewith to form a single body.

Additionally, thanks to the detachable pads 34, it is possible to replace only the hollow tubular element 32, more subject to damage/wear from bending, an operation not possible in the case of known rollers having the solid (full) instead of hollow rotating axis.

It should also be noted that the interference coupling between the tubular element 32 and the tubular jacket 36 has been found to be more reliable in time compared to other types of coupling so as to be able to be advantageously applied to embossing/laminating rollers which, as is known, rotate at high speeds, in the order of 500-600 rpm.

More particularly the hollow through axis (tubular element 32), although having a greater maximum camber with respect to a solid axis, has been found to be more advantageous with respect thereto as regards the fatigue life (longer life evaluated as fatigue safety factor) and the critical speed of the roller (greater speed evaluated as flexural critical speed), making it in this way more suitable to be used as through axis in embossing/laminating rollers which, as is known, are subjected to high speeds of rotation and to high loads.

Although the invention has been described above with particular reference to one of its embodiments, numerous modifications and variations will be apparent to a person skilled in the art in light of the above description. The present invention intends, therefore, to embrace all the modifications and the variations that fall within the scope of the following claims.

## Claims

1. An improved embossing/laminating roller (30), especially suitable for use in embossing/laminating or calendering apparatuses for the processing of tissue paper products such as toilet paper or all-purpose absorbent paper or nonwoven fabric products and similarly suitable for hygiene and sanitary use, comprising a central axis (31) apt to be set in rotation by means of a motion transmission device and externally and coaxially whereto a tubular jacket (36) is fitted, wherein said central axis (31) and tubular jacket (36) comprise reciprocal rigid restraint means, with said means co-operating for a transmission of motion between said central axis and said tubular jacket,
said roller (30) **characterised by** said central axis (31) comprising a centrally hollow tubular element (32), and by a pair of inserts or pads (34) axially coupled to the tubular element (32) at its opposite ends, said pads (34) being detachable.

2. The improved roller according to claim 1, **characterised in that** the tubular element (32) is longitudinally developed with an outer diameter which, starting from the end portions, gradually grows in the direction of a central band or portion (33) to define a barrelled external surface shape.

3. The improved roller according to claim 1 or 2, **characterised in that** the tubular jacket (36) comprises, at a central area of the inner surface, a central annular band or portion (37) internally projecting with diameter smaller than the diameter of the inner surface of said tubular jacket.

4. The improved roller according to any one of the preceding claims, **characterised in that** the inner diameter of the central annular band or portion (37) corresponds to the outer diameter of the tubular element (32) at the central band or portion (33).

5. The improved roller according to any one of the preceding claims, **characterised in that** the coupling between the annular band or portion (37) of the tubular jacket (36) and the central band or portion (33) of the tubular element (32) defines an interference forced coupling.

6. The improved roller according to claim 1, **characterised in that** said pair of inserts or pads (34) have ends (34') protruding with respect to the ends of the tubular element (32) for a coupling with respect to the elements supporting the rotation of said roller, said inserts or pads (34) being rigidly restrained to the opposite ends of the tubular element (32).

7. The improved roller according to any one of the preceding claims, **characterised in that** the tubular element (32), the inserts or pads (34) and the tubular jacket (36) are made in a metal material.

8. The improved roller according to any one of the preceding claims, **characterised in that** the tubular jacket (36) is externally coated with elastomeric or polyurethane material.

9. The improved roller according to any one of the preceding claims, **characterised in that** the tubular jacket (36) is externally engraved with embossing patterns.

10. An embossing/laminating or calendering unit or pair, **characterised in that** it comprises at least one improved roller according to any one of the preceding claims.

## Patentansprüche

1. Verbesserte Präge/Laminierwalze (30), welche besonders geeignet ist für die Verwendung in Präge/Laminier- oder Kalandervorrichtungen zur Verarbeitung von Tissuepapierprodukten wie Toilettenpapier oder saugfähigem Allzweckpapier oder Vliesstoffprodukten und ähnlich geeignet ist für den Hygiene- und Sanitärgebrauch, umfassend eine zentrale Achse (31), die eingerichtet ist, mittels einer Bewegungsübertragungsvorrichtung in Drehung versetzt zu werden und wobei außen von und koaxial mit dieser ein rohrförmiger Mantel (36) angebracht ist,
wobei die zentrale Achse (31) und der rohrförmige Mantel (36) hin- und hergehende starre Haltemittel umfassen, wobei diese Mittel für eine Bewegungsübertragung zwischen der zentralen Achse und dem rohrförmigen Mantel zusammenwirken,
wobei die Walze (30) durch die zentrale Achse (31), die ein zentral hohles rohrförmiges Element (32) umfasst, und durch ein Paar von Einsätzen oder Pads (34) gekennzeichnet ist, die axial mit dem rohrförmigen Element (32) an seinen gegenüberliegenden Enden gekuppelt sind, wobei die Pads (34) abnehmbar sind.

2. Verbesserte Walze nach Anspruch 1, **dadurch gekennzeichnet, dass** das rohrförmige Element (32) in Längsrichtung mit einem Außendurchmesser entwickelt ist, der, ausgehend von den Endabschnitten, allmählich in der Richtung eines zentralen Bands oder Abschnitts (33) wächst, um eine gewölbte Außenflächenform zu definieren.

3. Verbesserte Walze nach Anspruch 1 oder 2, **dadurch gekennzeichnet, dass** der rohrförmige Mantel (36), an einem zentralen Bereich der Innenfläche, ein zentrales ringförmiges Band oder einen Abschnitt (37) umfasst, das oder der mit einem Durchmesser nach innen absteht, der kleiner ist als der Durchmesser der Innenfläche des rohrförmigen Mantels.

4. Verbesserte Walze nach einem der vorhergehenden Ansprüche, **dadurch gekennzeichnet, dass** der Innendurchmesser des zentralen ringförmigen Bands oder Abschnitts (37) dem Außendurchmesser des rohrförmigen Elements (32) am zentralen Band oder Abschnitt (33) entspricht.

5. Verbesserte Walze nach einem der vorhergehenden Ansprüche, **dadurch gekennzeichnet, dass** die Kupplung zwischen dem ringförmigen Band oder Abschnitt (37) des rohrförmigen Mantels (36) und dem zentralen Band oder Abschnitt (33) des rohrförmigen Elements (32) eine Interferenzzwangskupplung definiert.

6. Verbesserte Walze nach Anspruch 1, **dadurch gekennzeichnet, dass** das Paar von Einsätzen oder Pads (34) Enden (34') aufweist, die in Bezug auf die Enden des rohrförmigen Elements (32) für eine Kupplung in Bezug auf die Elemente, welche die Drehung der Walze unterstützen, abstehen, wobei die Einsätze oder Pads (34) starr an den gegenüberliegenden Enden des rohrförmigen Elements (32) gehalten werden.

7. Verbesserte Walze nach einem der vorhergehenden Ansprüche, **dadurch gekennzeichnet, dass** das rohrförmige Element (32), die Einsätze oder Pads (34) und der rohrförmige Mantel (36) aus einem Metallmaterial hergestellt sind.

8. Verbesserte Walze nach einem der vorhergehenden Ansprüche, **dadurch gekennzeichnet, dass** der rohrförmige Mantel (36) außen mit elastomerem oder Polyurethan-Material beschichtet ist.

9. Verbesserte Walze nach einem der vorhergehenden Ansprüche, **dadurch gekennzeichnet, dass** der rohrförmige Mantel (36) außen mit Prägemustern graviert ist.

10. Präge/Laminier- oder Kalandereinheit oder -paar, **dadurch gekennzeichnet, dass** diese oder dieses mindestens eine verbesserte Walze nach einem der vorhergehenden Ansprüche umfasst.

## Revendications

1. Rouleau de gaufrage/laminage amélioré (30), convenant en particulier pour l'utilisation dans des appareils de gaufrage/laminage ou de calandrage pour le traitement de produits de papier hygiénique, tels du papier de toilette ou du papier absorbant universel ou des produits non-tissés et similaires convenant pour l'hygiène et un usage sanitaire, comprenant un axe central (31) apte pour être mis en rotation au moyen d'un dispositif de transmission de rotation et sur lequel une gaine tubulaire (36) est montée extérieurement et coaxialement,
dans lequel ledit axe central (31) et ladite gaine tubulaire (36) comprennent des moyens de retenue rigides réciproques, avec lesdits moyens coopérant pour une transmission de mouvement entre ledit axe central et ladite gaine tubulaire,
ledit rouleau (30) étant **caractérisé par** ledit axe central (31) comprenant un élément tubulaire centralement creux (32), et par une paire d'insertions ou de protections (34) couplées axialement à l'élément tubulaire (32) au niveau de ses extrémités opposées, lesdites protections (34) étant détachables.

2. Rouleau amélioré selon la revendication 1, **caractérisé en ce que** l'élément tubulaire (32) est développé longitudinalement avec un diamètre extérieur lequel, en partant des parties d'extrémité, augmente progressivement dans la direction d'une bande ou partie centrale (33) pour définir une forme de surface extérieure en berceau.

3. Rouleau amélioré selon la revendication 1 ou 2, **caractérisé en ce que** la gaine tubulaire (36) comprend, au niveau d'une zone centrale de la surface intérieure, une bande ou partie annulaire centrale (37) se projetant de manière interne avec un diamètre inférieur au diamètre de la surface intérieure de ladite gaine tubulaire.

4. Rouleau amélioré selon l'une quelconque des revendications précédentes, **caractérisé en ce que** le diamètre intérieur de la bande ou partie annulaire centrale (37) correspond au diamètre extérieur de l'élément tubulaire (32) au niveau de la bande ou partie centrale (33).

5. Rouleau amélioré selon l'une quelconque des revendications précédentes, **caractérisé en ce que** l'accouplement entre la bande ou partie annulaire (37) de la gaine tubulaire (36) et la bande ou partie centrale (33) de l'élément tubulaire (32) définit un accouplement forcé de serrage.

6. Rouleau amélioré selon la revendication 1, **caractérisé en ce que** ladite paire d'insertions ou de protections (34) a des extrémités (34') dépassant par rapport aux extrémités de l'élément tubulaire (32) pour un accouplement par rapport aux éléments supportant la rotation dudit rouleau, lesdites insertions ou protections (34) étant retenues de façon rigide contre les extrémités opposées de l'élément tubulaire (32).

7. Rouleau amélioré selon l'une quelconque des revendications précédentes, **caractérisé en ce que** l'élément tubulaire (32), les insertions ou protections (34) et la gaine tubulaire (36) sont formés par un matériau métallique.

8. Rouleau amélioré selon l'une quelconque des revendications précédentes, **caractérisé en ce que** la gaine tubulaire (36) est revêtue extérieurement par un matériau élastomère ou en polyuréthane.

9. Rouleau amélioré selon l'une quelconque des revendications précédentes, **caractérisé en ce que** la gaine tubulaire (36) est gravée extérieurement avec des motifs de gaufrage.

10. Unité ou paire de gaufrage/laminage ou de calandrage, **caractérisée en ce qu'**elle comprend au moins un rouleau amélioré selon l'une quelconque des revendications précédentes.
